# EUROPEAN PATENT APPLICATION

(11) **EP 1 669 397 A1**
(43) Date of publication of application: **14.06.2006**
(21) Application number: 04292842.4
(22) Date of filing: 01.12.2004
(51) Int. Cl.: C08K 5/37, C08K 5/47

(54) **Stabilizing compositions for chlorine-containing polymers and resins**

(71) Applicant: Arkema, 92800 Puteaux (FR)
(72) Inventor: Girois, Stéphane, 69530 Brignais (FR); Morel, Patrick, 69130 Ecully (FR); Tartarin, Isabelle, 69006 Lyon (FR)
(74) Representative: Treuil, Claude

(57) **Abstract**

The present invention relates to stabilizing compositions for chlorine-containing polymers and resins, which are substantially and preferably free from metals, and which contained at least one or more oxazole, thiazole or imidazole compounds of formula: 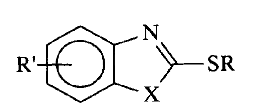 wherein X = O, S or NH,
and at least a co-stabilizer.

These compositions are particularly useful for the stabilization of PVC resins; the stabilized compositions can be advantageously used for manufacturing of pipes or fittings, compact or foamed sheets, films (rigid or flexible), profiles.

## Description

### Technical Field

The invention relates to stabilizing combinations which are substantially and preferably free from metals and more particularly free from lead, barium and cadmium and are intended for stabilizing chlorine-containing polymers and resins, especially PVC.

### Background Art

PVC can be stabilized by a range of additives. Compounds of lead, of barium and of cadmium are particularly suitable for this purpose and have been the main stabilizer systems for many years on an industrial scale but are nowadays controversial on ecological grounds because of their heavy metal content (cf. Kirk-Othmer: "Encyclopedia of Chemical Technology", 4^{th} ed., 1994, Vol. 12, Heat Stabilizers, pp. 1071-1091). The search therefore continues for effective stabilizers and stabilizer combinations which are free from lead, barium and cadmium.

1,3-disubstituted aminouracils have already been described as stabilizers for chlorine-containing polymers and resins, see for instance US 2,567,651; US 6,174,941 B1; US 5,925,696; US 6,156,830; US 6,084,013; US 6,194,494 B1.

Other substances have been also described for the stabilization of chlorine-containing polymers and resins :
➢ some of the latent-mercaptan-types are disclosed in EP 945,485 A1,
➢ N-alkyl maleimide-type substances in US 5,143,953,
➢ hydrazides.

### Disclosure of invention

The present invention is focusing on a new kind of molecules, chosen in the family of thiazoles, imidazoles or benzoxazoles as efficient way to stabilize PVC without presence of heavy metal.

Salts of cadmium, calcium and barium of mercaptobenzothiazole or benzoxazole were described as thermal stabilizers of PVC (Lopez C., R.G.; Ureta,E.; Elizalde H., L.E.; Lozano G.,M.J.; Gonzalez C.,M.C.; Revista de Plasticos Modernos (1993), 66 (446), 147-9) and also Abduvaliev NA; Askarov MA, Uzb.Khim.Zh . 1987, 3, 52-4.

Mercaptobenzimidazole or salts derived from were as smoke retardants or improvement in PVC-metal adhesion in US 4011194 patent from Pennwalt Corp and Lakokrasochnye Materialy I Ikh Primenenie, 1990, 6, 41-3; Lapshin VP; Bokrenev Yu A; Fedyakova NV; Sukhareva LA.

The present invention brings a new and efficient technical solution for stabilizing chlorine-containing polymers and resins free from metals and environment-friendly. The invention relates to stabilizing compositions based on
□ one or more organic compound having the following Formula I: 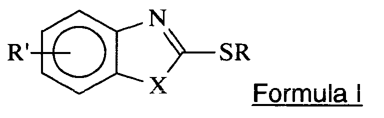 where :
   R and R', equal or different, are
   - an hydrogen, a C₁-C₃₀ alkyl group (linear or ramified), a C₂-C₃₀ alkyl group mono or polyinsaturated, C₁-C₃₀ alkyl group containing heteroatoms, C₁-C₃₀ alkyl group substituted by one or more phenyl groups (substituted or not), or by an epoxy function, or by a cycloaliphatic or heterocyclic group, or by halogen atom(s) or by a hydroxy or an alcoxy group.
   - a phenyl, benzyl, naphtyl, toluyl group, optionally substituted by -OH, -Cl, -alcoxy, -alkyl, - cycloalkyl, -COOR or OCOR (where R is a C₁-C₁₂ alkyl group)
      - X is: O (oxazoles family), S (thiazoles family) or NH (imidazoles family).

The preferred compositions are those for which R is H or CH₃ and R' is H.

The compositions preferably also comprise
□ at least one of the following compound as co-stabilizer:
   - one polyol and/or disaccharide alcohol,
   - one perchlorate compound
   - one glycidyl compound
   - one layered lattice coumpound (hydrotalcite),
   - one zeolite compound,
   - one phosphite compound,
   - one beta-diketone and/or beta ketoester,
   - one mercaptocarboxylic ester,
   - one metal soap,
   - one amino- and/or one thiouracil,
   - one hydrazide.

### 1-Polyols and Disaccharide Alcohols

Examples of suitable compounds of this type are: pentaerythritol, dipentaerythritol, tripentaerythritol, trimethylolethane, bistrimethylolpropane, inositol (cyclitols), polyvinyl alcohol, bis-trimethylolethane, trimethylolpropane, sorbitol (hexitols), maltitol, isomaltitol, cellobiitol, lactitol, lycasine, mannitol, lactose, leucrose, tris(hydroxyethyl) isocyanurate, tris(hydroxypropyl) isocyanurate, palatinitol, tetramethylolcyclohexanol, tetramethylolcyclopentanol, tetramethylolcyclopyranol, xylitol, arabinitol (pentitols), tetritols, glycerol, diglycerol, polyglycerol, thiodiglycerol or 1-O-.alpha.-D-glycopyranosyl-D-mannitol dihydrate. Of these, preference is given to the disaccharide alcohols.

It is also possible to use polyol syrups, such as sorbitol, mannitol and maltitol syrup. The polyols and/or disaccharide compounds can be employed in an amount of, for example, from 0.01 to 20, judiciously from 0.1 to 20 and, in particular, from 0.1 to 10 parts by weight per 100 parts by weight of chlorine-containing polymers and resins, such as PVC.

### 2-Perchlorate Compounds

Examples are those of the formula M(ClO₄)n, in which M is Li, Na, K, Mg, Ca, Sr, Ba, Zn, Al, La or Ce. Depending on the valency of M, the index n is 1, 2 or 3. The perchlorate salts can be present as solutions or can have been complexed with alcohols (polyols, cyclodextrins) or ether alcohols or ester alcohols. The ester alcohols also include the polyol partial esters. In the case of polyhydric alcohols or polyols, their dimers, trimers, oligomers and polymers are also suitable, such as di-, tri-, tetra- and polyglycols and also di-, tri- and tetrapentaerythritol or polyvinyl alcohol in various degrees of polymerization. Other suitable solvents are phosphate esters and also cyclic and acyclic carbonates. In this context, the perchlorate salts can be employed in various common forms of presentation; for example, as a salt or solution in water or an organic solvent as such, or adsorbed on a support material such as PVC, Ca silicate, zeolites or hydrotalcites, or bound by chemical reaction into a hydrotalcite or into another layered lattice compound. As polyol partial ethers, preference is given to glycerol monoethers and glycerol monothioethers. Further embodiments are described in EP 0 394 547, EP 0 457 471 and WO 94/24200.

The perchlorates can be employed in an amount of, for example, from 0.001 to 5, judiciously from 0.01 to 3, and, with particular preference, from 0.01 to 2 parts by weight per 100 parts by weight of chlorine-containing polymers and resins, such as PVC.

### 3-Glycidyl Compounds

These contain the glycidyl group attached directly to carbon, oxygen, nitrogen or sulfur atoms, such as in the present formula 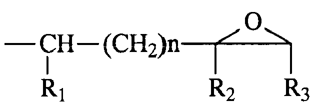 and in such compounds R₁ and R₃ are either both hydrogen and R₂ is hydrogen or methyl and n is 0 or R₁ and R₃ together are -CH₂ -CH₂ - or -CH₂ -CH₂ - CH₂ - and in that case R₂ is hydrogen and n is 0 or 1.
I) Glycidyl esters and .beta.-methylglycidyl esters obtainable by reacting a compound having at least one carboxyl group in the molecule with epichlorohydrin or glyceroldichlorohydrin or .beta.-methylepichlorohydrin. The reaction takes place judiciously in the presence of bases.
   As compounds having at least one carboxyl group in the molecule it is possible to use aliphatic carboxylic acids. Examples of these carboxylic acids are glutaric, adipic, pimelic, suberic, azelaic and sebacic acid or dimerized or trimerized linoleic acid, acrylic and methacrylic acid, caproic, caprylic, lauric, myristic, palmitic, stearic and pelargonic acid, and also the acids mentioned in connection with the organozinc compounds.
   However, it is also possible to employ cycloaliphatic carboxylic acids, such as, for example, cyclohexanecarboxylic, tetrahydrophthalic, 4-methyltetrahydrophthalic, hexahydrophthalic or 4-methylhexahydrophthalic acid.
   Aromatic carboxylic acids can also be used, examples being benzoic, phthalic, isophthalic, trimellitic and pyromellitic acid.
   It is likewise possible to make use of carboxyl-terminated adducts of, for example, trimellitic acid with polyols, such as glycerol or 2,2-bis(4-hydroxycyclohexyl)propane. Other epoxide compounds which can be used in the context of this invention are given in EP 0 506 617.
II) Glycidyl ethers or .beta.-methylglycidyl ethers obtainable by reacting a compound having at least one free alcoholic hydroxyl group and/or phenolic hydroxyl group with an appropriately substituted epichlorohydrin under alkaline conditions or in the presence of an acidic catalyst with subsequent alkali treatment.
   Ethers of this type are derived, for example, from acyclic alcohols, such as ethylene glycol, diethylene glycol and higher poly(oxyethylene) glycols, propane-1,2-diol, or poly(oxypropylene) glycols, propane-1,3-diol, butane-1,4-diol, poly(oxytetramethylene) glycols, pentane-1,5-diol, hexane-1,6-diol, hexane-2,4,6-triol, glycerol, 1,1,1-trimethylolpropane, bistri-methylolpropane, pentaerythritol, sorbitol, and from polyepichlorohydrins, butanol, amyl alcohol, pentanol, and from monofunctional alcohols such as isooctanol, 2-ethylhexanol, isodecanol and also C₇₋C₉ -alkanol and C₉-C₁₁ -alkanol mixtures. They are also derived, however, for example, from cycloaliphatic alcohols, such as 1,3- or 1,4-dihydroxycyclohexane, bis(4-hydroxycyclohexyl)methane, 2,2-bis-(4-hydroxycyclohexyl)propane or 1,1-bis(hydroxymethyl)cyclohex-3-ene, or they possess aromatic nuclei, such as N,N-bis(2-hydroxyethyl)aniline or p,p'-bis(2-hydroxyethylamino)diphenylmethane.
   The epoxide compounds can also be derived from mononuclear phenols, such as, for example, from phenol, resorcinol or hydroquinone; or, they are based on polynuclear phenols, such as, for example, on bis(4-hydroxyphenyl)methane, 2,2-bis(4-hydroxyphenyl)propane, 2,2-bis(3,5-dibromo-4-hydroxyphenyl)-propane, on 4,4'-dihydroxydiphenyl sulfone or on condensates of phenols with formaldehyde obtained under acidic conditions, such as phenol novolaks.
   Examples of further possible terminal epoxides are: glycidyl 1-naphthyl ether, glycidyl 2-phenylphenyl ether, 2-biphenylyl glycidyl ether, N-(2,3-epoxypropyl)phthalimide and 2,3-epoxypropyl 4-methoxyphenyl ether.
III) N-Glycidyl compounds obtainable by dehydrochlorination of the reaction products of epichlorohydrin with amines containing at least one amino hydrogen atom. These amines are, for example, aniline, N-methylaniline, toluidine, n-butylamine, bis(4-aminophenyl)methane, m-xylylenediamine or bis(4-methylaminophenyl)methane, and also N,N,O-triglycidyl-m-aminophenol or N,N,O-triglycidyl-p-aminophenol.
   However, the N-glycidyl compounds also include N,N'-di, N,N',N"-tri- and N,N',N",N'''-tetraglycidyl derivatives of cycloalkyleneureas, such as ethyleneurea or 1,3-propyleneurea and N,N'-diglycidyl derivatives of hydantoins, such as of 5,5-dimethylhydantoin or glycoluril and triglycidyl isocyanurate.
IV) S-Glycidyl compounds such as di-S-glycidyl derivatives derived from dithiols, such as ethane-1,2-dithiol or bis(4-mercaptomethylphenyl) ether, for example.
V) Epoxy compounds having a radical of the above formula in which R1 and R3 together are -CH₂-CH₂- and n is 0 are bis(2,3-epoxycyclopentyl) ether, 2,3-epoxycyclopentylglycidyl ether or 1,2-bis(2,3-epoxycyclopentyloxy) ethane. An epoxy resin having a radical of the above formula in which R₁ and R₃ together are -CH₂₋CH₂- and n is 1 is, for example, (3',4'-epoxy-6'-methylcyclohexyl)methyl 3,4-epoxy-6-methylcyclohexanecarboxylate.

### Examples of suitable terminal epoxides are:

a) liquid bisphenol A diglycidyl ethers, such as Araldit ® .GY 240, Araldit®.GY 250, Araldit® GY 260, Araldit® GY 266, Araldit ® GY 2600, Araldit® MY 790;
b) solid bisphenol A diglycidyl ethers, such as Araldit® GT 6071, Araldit® GT 7071, Araldit® GT 7072, Araldit® GT 6063, Araldit® GT 7203, Araldit® GT 6064, Araldit® GT 7304, Araldit® GT 7004, Araldit® GT 6084, Araldit® GT 1999, Araldit® GT 7077, Araldit® GT 6097, Araldit® GT 7097, Araldit® GT 7008, Araldit® GT 6099, Araldit® GT 6608, Araldit® GT 6609, Araldit® GT 6610;
c) liquid bisphenol F diglycidyl ethers, such as Araldit® .GY 281, Araldit® PY 302, Araldit® PY 306;
d) solid polyglycidyl ethers of tetraphenylethane, such as CG Epoxy Resin 0163;
e) solid and liquid polyglycidyl ethers of phenol-formaldehyde novolak, such as EPN 1138, EPN 1139, GY 1180, PY 307;
f) solid and liquid polyglycidyl ethers of o-cresol-formaldehyde novolak, such as ECN 1235, ECN 1273, ECN 1280, ECN 1299;
g) liquid glycidyl ethers of alcohols, such as Shell. Glycidyl ether 162, Araldit® DY 0390, Araldit® DY 0391;
h) liquid glycidyl ethers of carboxylic acids, such as Shell® Cardura E terephthalic acid ester, trimellitic acid ester, Araldit® PY 284;
i) solid heterocyclic epoxy resins (triglycidyl isocyanurate), such as Araldit® PT 810;
j) liquid cycloaliphatic epoxy resins such as Araldit® CY 179;
k) liquid N,N,O-triglycidyl ethers of p-aminophenol, such as Araldit®MY 0510;
I) tetraglycidyl-4,4'-methylenebenzamine or N,N,N',N'-tetraglycidyldiamino-phenylmethane, such as Araldit® MY 720, Araldit® MY 721.

Preference is given to the use of epoxy compounds having two functional groups. In principle, however, it is also possible to employ epoxy compounds having one, three or more functional groups.

Use is made predominantly of epoxy compounds, especially diglycidyl compounds, having aromatic groups.

If desired, it is also possible to employ a mixture of different epoxy compounds. Particular preference is given as terminal epoxy compounds to diglycidyl ethers based on bisphenols, such as on 2,2-bis(4-hydroxyphenyl)propane (bisphenol A), bis(4-hydroxyphenyl)methane or mixtures of bis(ortho/para-hydroxyphenyl)methane (bisphenol F), for example.

The terminal epoxy compounds can be employed in an amount of preferably at least 0.1 part, for example from 0.1 to 50, judiciously from 1 to 30 and in particular, from 1 to 25 parts by weight, per 100 parts by weight of chlorine-containing polymers and resins, such as PVC.

### 4-Hydrotalcites

The chemical composition of these compounds is known to the person skilled in the art, for example, from patents DE 3,843,581, EP 0 062 813 and WO 93/20135.

Compounds from the series of the hydrotalcites can be described by the following general formula:

M²⁺₁₋ₓ M³⁺ₓ (OH)₂ (An^{b-})_{x/b}.dH₂ O

where
M²⁺ =one or more metals from the group Mg, Ca, Sr, Zn and Sn,
M³⁺ = Al or B,
An is an anion having the valency n,
b is a number from 1-2,
0<x<0.5
m is a number from 0-20 and d is a number in the range from 0 to 300, preferably in the range from 0.5 to 30.

Preferably An =OH⁻, ClO₄⁻, HCO₃⁻, CH₃COO⁻, C₆H₅COO⁻, CO₃²⁻, (CHOHCOO)₂²⁻, (CH₂COO)₂²⁻, CH₃CHOHCOO⁻, HPO₃⁻ or HPO₄²⁻ ;

Examples of hydrotalcites are Al₂O₃ 6MgO CO₂ 12H₂O (i), Mg_{4,5} Al₂ (OH)₁₃CO₂ 3.5H₂O (ii), 4MgO Al₂O₃ CO₂ 9H₂O (iii), 4MgO.Al₂O₃.CO₂ 6H₂O, ZnO 3MgO Al₂O₃ CO₂ 8-9H₂O and ZnO 3MgO Al₂O₃ CO₂.5-6H₂O.

Very particular preference is given to types i, ii and iii.
5-Zeolites (Alkali Metal and Alkaline Earth Metal Aluminosilicates)

These can be described by the following general formula

M_{x/n} [(AlO₂)x (SiO₂)_{y}].wH₂O

in which n is the charge of the cation M;
M is an element from the first or second main group, such as Li, Na, K, Mg, Ca, Sr or Ba;
y:x is a number from 0.8 to 15, preferably from 0.8 to 1.2; and
w is a number from 0 to 300, preferably from 0.5 to 30,

Examples of zeolites are sodium aluminosilicates of the following types:
zeolite A, sodalite,zeolite Y, zeolite X;
or the zeolites preparable by complete or partial replacement of the Na atoms by Li, K, Mg, Ca, Sr or Zn atoms

Preferred zeolites are zeolite A, sodalite; zeolite Yzeolite X; and those X zeolites having an Si/Al ratio of about 1:1 called LSX for Low Silica X, or the zeolites preparable by complete or partial replacement of the Na atoms by Li, K, Mg, Ca, Sr, Ba or Zn atoms.

The zeolites indicated can also be lower in water content, or anhydrous.

Further suitable zeolites arezeolite Pzeolite MAP or the zeolites preparable by complete or partial replacement of the Na atoms by Li, K and/or H atoms, such as zeolite K-F, zeolite D, as described for instance in Barrer et al., J. Chem. Soc. 1952, 1561-71, and in U.S. Pat. No. 2,950,952;

Also suitable are the following zeolites: K offretite,; zeolite R,; zeolite LZ-217,; Ca-free zeolite LZ-218,; zeolite T, zeolite LZ-220,zeolite L; zeolite LZ-211; zeolite LZ-212; zeolite O, zeolite LZ-217; zeolite LZ-219; zeolite Rho, zeolite LZ-214,; zeolite ZK-19,; zeolite W (K-M), zeolite ZK-5, zeolite Q.

Particular preference is given to zeolite P grades of the above formula in which x is from 2 to 5 and y is from 3.5 to 10, and very particular preference is given to zeolite MAP of the standard formula in which x is 2 and y is from 3.5 to 10. In particular, the zeolite concerned is zeolite Na-P, i.e. M is Na. This zeolite generally occurs in the variants Na-P-1, Na-P-2 and Na-P-3, which differ in their cubic, tetragonal or orthorhombic structure (R. M. Barrer, B. M. Munday, J. Chem. Soc. A 1971, 2909-14). The literature reference just referred to also describes the preparation of zeolite P-1 and P-2. According to that reference, Zeolite P-3 is very rare and is therefore of virtually no practical interest. The structure of the zeolite P-1 corresponds to the gismondite structure known from the abovementioned Atlas of Zeolite Structures. In recent literature (EP-A-384 070) a distinction is made between cubic (zeolite B or Pc) and tetragonal (zeolite P1) zeolites of the P type. Also mentioned therein are relatively new zeolites of the P type having Si:Al ratios below 1.07:1. These are zeolites having the designation MAP or MA-P, for "Maximum Aluminum P".

Depending on the preparation process, zeolite P may also include small fractions of other zeolites. Highly pure zeolite P has been described in WO 94/26662. Within the scope of the invention it is also possible to use those finely divided, water-insoluble sodium aluminosilicates which have been precipitated and crystallized in the presence of water-soluble organic or inorganic dispersants. These can be introduced into the reaction mixture in any desired manner, prior to or during the precipitation and crystallization.

Very particular preference is given to Na zeolite A and Na zeolite P.

The hydrotalcites and/or zeolites can be employed in amounts, for example, from 0.1 to 20, judiciously from 0.1 to 10 and, in particular, from 0.1 to 5 parts by weight per 100 parts by weight of chlorine-containing polymers and resins, such as PVC.

### 6-Phosphites (phosphorous trimesters), thiophosphites and thiophosphates

Examples are triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl) pentaerythritol diphosphite, bisisodecyloxy-pentaerythritol diphosphite, bis(2,4-di-tert-butyl-6-methylphenyl) pentaerythritol diphosphite, bis(2,4,6-tri-tert-butylphenyl) pentaerythritol diphosphite, tristearyl sorbitol triphosphite, bis(2,4-di-tert-butyl-6-methylphenyhl) methyphenyl) methyl phosphite, bis(2,4-di-tert-butyl-6-methylphenyl) ethyl phosphite. Particularly suitable are trioctyl, tridecyl, tridodecyl, tritetradecyl, tristearyl, trioleyl, triphenyl, tricresyl, tris-p-nonylphenyl or tricylcohexyl phosphite and, with particular preference, the aryl dialkyl and alkyl diaryl phosphites, examples being phenyl didecyl, 2,4-di-tert-butylphenyl didodecyl phosphite, 2,6-di-tert-butylphenyl didodecyl phosphite and the dialkyl and diaryl pentaerythritol diphosphites, such as distearyl pentaerythritol diphosphite, and also nonstoichiometric triaryl phosphites whose composition is, for example, (H₁₉ C₉ -C₆ H₄)O_{1.5} P(OC_{12,13} H_{25,27})_{1.5} or (H₈ C₁₇-C₆ H₄)O₂ P(i-C₈ H₁₇ O) or (H₁₉ C₉-C₆ H₄)O_{1.5} P(OC_{9,11} H_{19,23})_{1,5} or

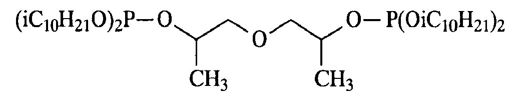

Preferred organic phosphites are distearyl pentaerythritol diphosphite, trisnonylphenyl phosphite and phenyl didecyl phosphite. Other suitable phosphites are phosphorous diesters (with abovementioned radicals) and phosphorous monoesters (with abovementioned radicals), possibly in the form of their alkali metal, alkaline earth metal, zinc or aluminum salts. It is also possible for these phosphorous esters to have been applied to an alumo salt compound; in this regard see also DE-A-4 031 818.

The organic phosphites can be employed in an amount of, for example, from 0.01 to 10, judiciously from 0.05 to 5 and, in particular, from 0.1 to 3 parts by weight per 100 parts by weight of chlorine-containing polymers and resins, such as PVC.

By thiophosphites and thiophosphates are meant compounds of the general type (RS₃P, (RS₃P=O and (RS)₃P=S, respectively, as are described, for instance, in the patents DE 2 809 492, EP 0 090 770 and EP 0 573 394. Examples of these compounds are trithiohexyl phosphite, trithiooctyl phosphite, trithiolauryl phosphite, trithiobenzyl phosphite, trithiophosphorous acid tris(carbo-i-octyloxy)methyl ester, trithiophosphorous acid tris(carbotrimethylcyclohexyloxy)methyl ester, trithiophosphoric acid S,S,S-tris(carbo-i-octyloxy)methyl ester, trithiophosphoric acid S,S,S-tris(carbo-2-ethylhexyloxy)methyl ester, trithiophosphoric acid S,S,S-tris-1-(carbohexyloxy)ethyl ester, trithiophosphoric acid S,S,S-tris-1-(carbo-2-ethylhexyloxy)ethyl ester and trithiophosphoric acid S,S,S-tris-2-(carbo-2-ethylhexyloxy)ethyl ester.

### 7-Beta-diketones, beta-keto esters

1,3-dicarbonyl compounds which can be used may be linear or cyclic dicarbonyl compounds. Preference is given to the use of dicarbonyl compounds of the following formulae: R'₁COCHR'₂-COR'₃ in which R'₁ is C₁-C₂₂ -alkyl, C₅-C₁₀ - hydroxyalkyl, C₂-C₁₈ -alkenyl, phenyl, OH-, C₁-C₄ -alkyl-, C₁-C₄-alkoxy- or halogen-substituted phenyl, C₇-C₁₀ -phenylalkyl, C₅-C₁₂ -cycloalkyl, C₁-C₄ -alkyl-substituted C₅-C₁₂ -cycloalkyl or a group -R'₅-S-R'₆ or -R'₅-O-R'₆, R'₂ is hydrogen, C₁-C₈ -alkyl, C₂-C₁₂ -alkenyl, phenyl, C₇-C₁₂ -alkylphenyl, C₇-C₁₀ -phenylalkyl or a group -CO-R'₄, R'₃ is as defined for R'₁ or is C₁-C₁₈ -alkoxy, R'₄ is C₁-C₄ -alkyl or phenyl, R₅ is C₁-C₁₀ -alkylene and R'₆ is C₁-C₁₂ -alkyl, phenyl, C₇-C₁₈ -alkylphenyl or C₇-C₁₀ -phenylalkyl.

These include the hydroxyl-containing diketones of EP 0 346 279 and the oxa and thia diketones of EP 0 307 358, as well as the keto esters based on isocyanic acid, of U.S. 4,339,383.
R'1 and R'3 as alkyl can in particular be C1 -C18 -alkyl, such as, for example methyl, ethyl, n-propyl, isopropyl, n-butyl, tert-butyl, pentyl, hexyl, heptyl, octyl, decyl, dodecyl or octadecyl.
R'1 and R'3 as hydroxyalkyl are in particular a group -(CH2)n -OH in which n is 5,6or7.
R'1 and R'3 as alkenyl can for example be vinyl, allyl, methallyl, 1-butenyl, 1-hexenyl or oleyl, preferably allyl.
R'1 and R'3 as OH-, alkyl-, alkoxy- or halogen-substituted phenyl can for example be tolyl, xylyl, tert-butylphenyl, methoxyphenyl, ethoxyphenyl, hydroxyphenyl, chlorophenyl or dichlorophenyl.
R'1 and R'3 as phenylalkyl are in particular benzyl. R'2 and R'3 as cycloalkyl or alkylcycloalkyl are, in particular, cyclohexyl or methylcyclohexyl. R'2 as alkyl can in particular be C1 -C4 -alkyl. R'2 as C2 -C12 -alkenyl can in particular be allyl. R'2 as alkylphenyl can in particular be tolyl. R'2 as phenylalkyl can in particular be benzyl. Preferably, R'2 is hydrogen. R'3 as alkoxy can for example be methoxy, ethoxy, butoxy, hexyloxy, octyloxy, dodecyloxy, tridecyloxy, tetradecyloxy or octadecyloxy. R'5 as C1 -C10 -alkylene is, in particular, C2 -C4 -alkylene. R'6 as alkyl is, in particular, C4 -C12 -alkyl, such as, for example butyl, hexyl, octyl, decyl or dodecyl. R'6 as alkylphenyl is in particular tolyl. R'6 as phenylalkyl is in particular benzyl. Examples of 1,3-dicarbonyl compounds of the above formula and their alkali metal, alkaline earth metal and zinc chelates are acetylacetone, butanoylacetone, heptanoylacetone, sterolyacetone, palmitoylacetone, lauroylacetone, 7-tert-nonylthio-2,4-heptanedione, benzoylacetone, dibenzoylmethane, lauroylbenzoylmethane, palmitoylbenzoylmethane, stearoylbenzoylmethane, isooctylbenzoylmethane, 5-hydroxycapronyl-benzoylmethane, tribenzoylmethane, bis(4-methylbenzoyl)methane, benzoyl-p-chlorobenzoylmethane, bis(2-hydroxybenzoyl)methane, 4-methoxybenzoyl-benzoylmethane, bis(4-methoxybenzoyl)methane, 1-benzoyl-1-acetylnonane, benzoylacetylphenylmethane, stearoyl-4-methoxybenzoylmethane, bis(4-tert-butylbenzoyl) methane, benzoylformylmethane, benzoylphenylacetylmethane, biscyclohexanoylmethane, di-pivaloylmethane, 2-acetylcyclopentanone, 2-benzoylcyclopentanone, methyl, ethyl and allyl diacetoacetate, methyl and ethyl benzoyl-, propionyl- and butyrylacetoacetate, triacetylmethane, methyl, ethyl, hexyl, octyl, dodecyl or octadecyl acetoacetate, methyl, ethyl, butyl, 2-ethylhexyl, dodecyl or octadecyl benzoylacetate, and also C1 - C18 -alkyl propionylacetates and butyrylacetates; ethyl, propyl, butyl, hexyl or octyl stearoylacetate, and also polycyclic .beta.-keto esters, as described in EP 0 433 230, and dehydraacetic acid, and the zinc, magnesium or alkali metal salts thereof.

Preference is given to 1,3-diketo compounds of the above formula in which R'1 is C1 -C18 -alkyl, phenyl, OH-, methyl- or methoxy-substituted phenyl, C₇-C₁₀ - phenylalkyl or cyclohexyl, R'2 is hydrogen and R'3 is as defined for R'1. The 1,3-diketo compounds can be employed in amount of, for example, from 0.01 to 10, judiciously from 0.01 to 3 and, in particular, from 0.01 to 2 parts by weight per 100 parts by weight of chlorine-containing polymers and resins, such as PVC C.

### 8-Mercaptocarboxylic esters

Examples of these compounds are esters of thioglycolic acid, thiomalic acid, mercaptopropionic acid, the mercaptobenzoic acids and thiolactic acid, mercaptoethyl stearate and mercaptoethyl oleate, as are described in patents FR 2459 816, EP 0 090 748, FR 2 552 440 and EP 0 365 483. The generic mercaptocarboxylic esters also embrace polyol esters and partial esters thereof, and also thioethers derived from them. These molecules may also be latent-marcaptides as described in EP -A1- 945 485

### 9- Metal soaps

Metal soaps are primarily metal carboxylates of preferably relatively long-chain carboxylic acids. Familiar examples are stearates and laurates, and also oleates and salts of shorter-chain alkanecarboxylic acids. Alkylbenzoic acids are also said to be included under metal soaps. Metals which may be mentioned are Li, Na, K, Mg, Ca, Sr, Ba, Zn, Al, La, Ce and rare earth metals. Use is often made of what are known as synergistic mixtures, such as barium/zinc, magnesium/zinc, calcium/zinc or calcium/magnesium/zinc stabilizers. The metal soaps can be employed individually or in mixtures. A review of common metal soaps is given in Ullmann's Encyclopedia of Industrial Chemistry, 5^{th} Ed., Vol. A16 (1985), p. 361 ff.). It is judicious to use organic metal soaps from the series of the aliphatic saturated C₂-C₂₂ carboxylates, the aliphatic unsaturated C₃-C₂₂ carboxylates, the aliphatic C₂-C₂₂ carboxylates substituted by at least one OH group, the cyclic and bicyclic carboxylates having 5-22 carbon atoms, the unsubstituted benzenecarboxylates substituted by at least one OH group and/or by C₁-C₁₆ -alkyl, the unsubstituted naphthalenecarboxylates substituted by at least one OH group and/or by C₁-C₁₆ -alkyl, the phenyl C₁-C₁₆ - alkylcarboxylates, the naphthyl C₁-C₁₆ -alkylcarboxylates or the unsubstituted or C₁₋C₁₂ -alkyl-substituted phenolates, tallates and resinates.

Named examples which may be mentioned are the zinc, calcium, magnesium or barium salts of monovalent carboxylic acids such as acetic, propionic, butyric, valeric, hexanoic, enanthoic, octanoic, neodecanoic, 2-ethylhexanoic, pelargonic, decanoic, undecanoic, dodecanoic, tridecanoic, myristic, palmitic, isostearic, stearic, 12-hydroxystearic, behenic, benzoic, p-tert-butylbenzoic, N,N-dimethylhydroxybenzoic, 3,5-di-tert-butyl-4-hydroxybenzoic, toluic, dimethylbenzoic, ethylbenzoic, n-propylbenzoic, salicylic, p-tert-octylsalicyclic and sorbic acid; calcium, magnesium and zinc salts of the monoesters of divalent carboxylic acids such as oxalic, malonic, succinic, glutaric, adipic, fumaric, pentane-1,5-dicarboxylic, hexane-1,6-dicarboxylic, heptane-1,7-dicarboxylic, octane-1,8-dicarboxylic, phthalic, isophthalic, terephthalic and hydroxyphthalic acid; and of the di- or triesters of tri- or tetravalent carboxylic acids such as hemimellitic, trimellitic, pyromellitic and citric acid.

Preference is given to calcium, magnesium and zinc carboxylates of carboxylic acids having 7 to 18 carbon atoms (metal soaps in the narrow sense), such as, for example, benzoates or alkanoates, preferably stearate, oleate, laurate, palmitate, behenate, hydroxystearates, dihydroxystearates or 2-ethylhexanoate. Particular preference is given to stearate, oleate and p-tert-butylbenzoate. Overbased carboxylates, such as overbased zinc octoate, are also preferred. Preference is likewise given to overbased calcium soaps.

If desired, it is also possible to employ a mixture of carboxylates of different structures.

Preference is given to compositions, as described, comprising an organozoic and/or organocalcium compound.

### Systems

In addition to the compounds mentioned, organoaluminum compounds are also suitable, as are compounds analogous to those mentioned above, especially aluminum tristearate, aluminum distearate and aluminum monostearate, and also aluminum acetate and basic derivatives derived therefrom.

Further information on the aluminum compounds which can be used and are preferred is given in US 4,060,512 and US 3,243,394.

Also suitable in addition to the compounds already mentioned are organic rare earth compounds, especially compounds analogous to those mentioned above. The term rare earth compound means especially compounds of the elements cerium, praseodymium, neodymium, samarium, europium, gadolinium, terbium, dysprosium, holmium, erbium, thulium, ytterbium, lutetium, lanthanum and yttrium, mixturesespecially with cerium--being preferred. Further preferred rare earth compounds can be found in EP-A-0 0108 023.

It is possible if desired to employ a mixture of zinc, alkali metal, alkaline earth metal, aluminum, cerium, lanthanum or lanthanoid compounds of different structure. It is also possible for organozinc, organoaluminum, organocerium, organo-alkali metal, organo-alkaline earth metal, organolanthanum or organolanthanoid compounds to be coated on an alumo salt compound; in this regard see also DE A 4 031 818.

The metal soaps and/or mixtures thereof can be employed in an amount of, for example, from 0.001 to 10 parts by weight, judiciously from 0.01 to 8 parts and, with particular preference, from 0.05 to 5 parts by weight per 100 parts by weight of chlorine-containing polymers and resins, such as PVC. The same applies to the further metal stabilizers. 10- Further metal stabilizers

Here, mention may be made of the organometallic stabilizers and in particular of the organotin stabilizers. These can be the carboxylates, maleates, mercaptides and sulfides, in particular.

Examples of suitable compounds are described in US 4,743,640, US 2,567,651, US 2,598,936, US 2,567,652, US 6,174,941B1, US 5,925,696, US 6,156,830, US 6,084,013, US 6,194 494,B1, US 4105627, US 4,352,903, DE 2,427,853.

Further customary additives can also optionally be added to the compositions of the invention, such as other stabilizers, auxiliaries and processing aids, examples being alkali metal compounds and alkaline earth metal compounds, lubricants, plasticizers, pigments, fillers, epoxidized fatty acid esters, antioxidants, UV absorbers and light stabilizers, optical brighteners, impact modifiers and processing aids, gelling agents, antistats, biocides, metal passivators, flame retardants and blowing agents, antifog agents, compatibilizers and antiplateouts agents. (cf. "Handbook of PVC Formulating" by E. J. Wickson, John Wiley & Sons, New York 1993). Examples of such additives are as follows:
I. Fillers and reinforcing agents are, for example, calcium carbonate, dolomite, wollastonite, magnesium oxide, magnesium hydroxide, silicates, china clay, talc, glass fibers, glass beads, wood flour, mica, metal oxides, or metal hydroxides, carbon black, graphite, rock flour, heavy spar, glass fibers, talc, kaolin and chalk.. The fillers can be employed in an amount of for example, from 5 to 80, judiciously from 10 to 40 and, in particular, from 10 to 20 parts by weight per 100 parts by weight of chlorine-containing polymers and resins, such as PVC.
II. Alkali metal and alkaline earth metal compounds
   By these are meant principally the carboxylates of the above-described metal soaps (see part 9-), but also corresponding oxides and/or hydroxides or carbonates. Also suitable are mixtures thereof with organic acids. Examples are LiOH, NaOH, KOH, CaO, Ca(OH) ₂, MgO, Mg(OH)₂, Sr(OH)₂, Al(OH)₃, CaCO₃ (also basic carbonates, such as magnesia alba and hutite), and also Na and K salts of fatty acids. In the case of alkaline earth metal and Zn carboxylates it is also possible to employ their adducts with MO or M(OH)₂ (M=Ca, Mg, Sr or Zn), known as "overbased" compounds. In addition to the stabilizer combination of the invention it is preferred to employ alkali metal carboxylates, alkaline earth metal carboxylates and/or aluminum carboxylates.
III.Lubricants
   Examples of lubricants are montan wax, fatty acid esters, PE waxes, amide waxes, chlorinated paraffins, glycerol esters or alkaline earth metal soaps. Lubricants which can be used are also described in "Kunststoffadditive", R. Gachter/H. Muller, Carl Hanser Verlag, 3rd Ed., 1989, pages 478-488. Mention may also be made of fatty ketones (as described in DE 4 204 887) and of silicone-based lubricants (as described in EP 0 225 261) or combinations thereof, as set out in EP 259,783. Calcium stearate is preferred. The lubricants can also be applied to an alumo salt compound; in this regard see also DE-A-4 031 818.
IV. Plasticizers
   Examples of suitable organic plasticizers are those from the following groups:
   A) Phthalates: examples of such plasticizers are dimethyl, diethyl, dibutyl, dihexyl, di-2-ethylhexyl, di-n-octyl, diisooctyl, diisononyl, diisodecyl, diisotridecyl, dicyclhexyl, dimethylcyclohexyl, dimethylglycol, dibutylglycol, benzyl butyl and diphenyl phthalates, and also mixtures of phthalates, such as C7 -C9 - and C9 -C11 - alkyl phthalates obtained from predominantly linear alcohols, C6 -C10 -n-alkyl phthalates and C8 -C10 -n-alkyl phthalates. Of these preference is given to dibutyl, dihexyl, di-2-ethylhexyl, di-n-octyl, diisooctyl, diisononyl, diisodecyl, diisotridecyl and benzyl butyl phthalate, and the stated mixtures of alkyl phthalates. Particular preference is given to di-2-ethylhexyl,diisononyl and diisodecyl phthalate, which are also known by the common abbreviations DOP (dioctyl phthalate, di-2-ethylhexyl phthalate), DINP (diisononyl phthalate) and DIDP (diisodecyl phthalate).
   B) Esters of aliphatic dicarboxylic acids, especially esters of adipic, azelaic and sebacic acid: examples of such plasticizers are di-2-ethylhexyl adipate, diisooctyl adipate (mixture), diisononyl adipate (mixture), diisodecyl adipate (mixture), benzyl butyl adipate, benzyl octyl adipate, di-2-ethylhexyl azelate, di-2-ethylhexyl sebacate and diisodecyl sebacate (mixture). Di-2-ethylhexyl adipate and diisooctyl adipate are preferred.
   C) Trimellitates, examples being tri-2-ethylhexyl trimellitate, triisodecyl trimellitate (mixture), triisotridecyl trimellitate, triisooctyl trimellitate (mixture) and also tri-C6 -C8 -alkyl, tri-C6 -C10 -alkyl, tri-C7 -C9 -alkyl- and tri-C9 -C11 -alkyl trimellitates. The latter trimellitates are formed by esterification of trimellitic acid with the corresponding alkanol mixtures. Preferred trimellitates are tri-2-ethylhexyl trimellitate and the abovementioned trimellitates from alkanol mixtures. Customary abbreviations are TOTM (trioctyl trimellitate, tri-2-ethylhexyl trimellitate), TIDTM (triisodecyl trimellitate) and TITDTM (triisotridecyl trimellitate).
   D) Epoxy plasticizers: these are primarily epoxidized unsaturated fatty acids, such as epoxidized soybean oil.
   E) Polymer plasticizers: a definition of these plasticizers and examples of them are given in "Kunststoffadditive", R. Gachter/H. Muller, Carl Hanser Verlag, 3rd ed., 1989, section 5.9.6, pages 412-415, and also in "PVC Technology", W. V. Titow, 4th ed., Elsevier Publ., 1984, pages 165-170. The most common starting materials for preparing the polyester plasticizers are dicarboxylic acids, such as adipic, phthalic, azelaic and sebacic acids; diols, such as 1,2-propanediol, 1,3-butanediol, 1,4-butanediol, 1,6-hexanediol, neopentyl glycol and diethylene glycol.
   F) Phosphoric esters: a definition of these esters is given in the abovementioned "Taschenbuch der Kunststoffadditive" section 5.9.5, pp. 408-412. Examples of such phosphoric esters are tributyl phosphate, tri-2-ethylbutyl phosphate, tri-2-ethylhexyl phosphate, trichloroethyl phosphate, 2-ethylhexyl diphenyl phosphate, cresyl diphenyl phosphate; triphenyl phosphate, tricresyl phosphate and trixylenyl phosphate. Preference is given to tri-2-ethylhexyl phosphate and to Reofos® 50 and 95 (Ciba Speziafitatenchemie).
   G) Chlorinated hydrocarbons (paraffins)
   H) Hydrocarbons
   I) Monoesters, e.g., butyl oleate, phenoxyethyl oleate, tetrahydrofurfuryl oleate and alkylsulfonic esters.
   J) Glycol esters, e.g., diglycol benzoates.
   Definitions and examples of plasticizers of groups G) to J) are given in the following handbooks: "Kunststoffadditive", R. Gachter/H. Muller, Carl Hanser Verlag, 3rd ed., 1989, section 5.9.14.2, pp. 422-425, (group G), and section 5.9.14.1, p. 422, (group H). "PVC Technology", W. V. Titow, 4th ed., Elsevier Publishers, 1984, section 6.10.2, pages 171-173, (group G), section 6.10.5 page 174, (group H), section 6.10.3, page 173, (group I) and section 6.10.4, pages 173-174 (group J). It is also possible to use mixtures of different plasticizers. The plasticizers can be employed in an amount of, for example, from 5 to 20 parts by weight, judiciously from 10 to 20 parts by weight, per 100 parts by weight of of chlorine-containing polymers and resins, such as PVC. Rigid or semirigid PVC contains preferably up to 10%, with particular preference up to 5% of plasticizer, or no plasticizer.
V. Pigments
   Suitable substrates are known to the person skilled in the art. Examples of inorganic pigments are TiO₂, zirconium oxide-based pigments, BaSO₄, zinc oxide (zinc white) and lithopones (zinc sulfide/barium sulfate), carbon black, carbon black/titanium dioxide mixtures, iron oxide pigments, Sb₂O₃, (Ti,Ba, Sb)O₂, Cr₂O₃, spinels, such as cobalt blue and cobalt green, Cd(S,Se), ultramarine blue. Organic pigments are, for example, azo pigments, phthalocyanine pigments, quinacridone pigments, perylene pigments, diketopyrrolopyrrole pigments and anthraquinone pigments. Preference is also given to TiO₂ in micronized form.
VI. Epoxidized fatty acid esters and other epoxy compounds
   The stabilizer combination of the invention may additionally comprise preferably at least one epoxidized fatty acid ester. Particularly suitable such esters are those of fatty acids from natural sources (fatty acid glycerides), such as soybean oil or rapeseed oil. It is, however, also possible to employ synthetic products such as epoxidized butyl oleate. Epoxidized polybutadiene and polyisoprene can also be used, as they are or in partially hydroxylated form, or else homo- or copolymeric glycidyl acrylate and glycidyl methacrylate can be used. These epoxy compounds can also have been applied to an alumo salt compound; in this regard see also DE-A-4 031 818.
VII. Antioxidants
   Customary antioxidants can be used, alone or in combination. Examples of suitable such compounds are alkylated monophenols, for example, 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-iso-butylphenol, 2,6-di-cyclopentyl-4-methylphenol, 2-(alpha-methylcyclohexyl)-4,6-dimethylphenol, 2,6-di-octadecyl-4-methylphenol, 2,4,6-tricyclohexylphenol, 2,6-di-tert-butyl-4-methoxymethylphenol, 2,6-dinonyl-4-methylphenol, 2,4-dimethyl-6-(1'-methylundec-1'-yl)phenol, 2,4-dimethyl-6-(1'-methylheptadex-1'-yl)phenol, 2,4-dimethyl-6-(1'-methyltridec-1'-yl)phenol, octylphenol, nonylphenol, dodecylphenol and mixtures thereof.
   Alkylthiomethylphenols, for example, 2,4-dioctylthiomethyl-6-tert-butylphenol, 2,4-dioctylthiomethyl-6-methylphenol, 2,4-dioctylthiomethyl-6-ethylphenol, 2,6-didodecylthiomethyl-4-nonylphenol.
   Alkylated hydroquinones, for example, 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
   Hydroxylated thiodiphenyl ethers, for example, 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis-(3,6-di-sec-amylphenol)-4,4'-bis(2,6-dimethyl-4-hydroxyphenyl) disulfide.
   Alkylidenebisphenols, for example, 2,2'-methylenebis(6-tert-butyl-4-methylphenol), 2,2'-methylenebis(6-tert-butyl-4-ethylphenol), 2,2'-methylenebis[4-methyl-6-(alpha-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(alpha-methylbenzyl)-4-nonylphenol], 2,2'-methylenebis[6-(alpha,alpha-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol 1,1,3-tris(5-tert-butyl-4-hydroxy-2-methyl-phenyl)butane, 1,1-bis-(5-tert-butyl-4-hydroxy-2-methylphenyl)-3-n-dodecylmercaptobutane, ethylene glycol bis[3,3-bis-(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphen yl] terephthalate, 1,1-bis(3,5-dimethyl-2-hydroxyphenyl)butane, 2,2-bis(3,5-di-tert-butyl-4-hydroxyphenyl)propane, 2,2-bis(4-hydroxyphenyl)propane, 2,2-bis(5-tert-butyl-4-hydroxy-2-methylphenyl)-4-n-dodecylmercaptobutane, 1,1,5,5-tetra(5-tert-butyl-4-hydroxy-2-methylphenyl)pentane.
   Benzyl compounds, for example, 3,5,3',5'-tetra-tert-butyl-4,4'-dihydroxydibenzyl ether, octadecyl, 4-hydroxy-3,5-dimethylbenzyl-mercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl) sulfide, isooctyl, 3,5-di-tert-butyl-4-hydroxybenzyl-mercaptoacetate.
   Hydroxybenzylated malonates, for example, dioctadecyl 2,2-bis(3,5-di-tert-butyl-2-hydroxybenzyl)malonate, dioactadecyl 2-(3-tert-butyl-4-hydroxy-5-methylbenzyl)malonate, didodecyl mercaptoethyl-2,2-bis(3,5-di-tert-butyl-4-hydroxybenzyl)malonate, di[4-(1,1,3,3-tetramethylbutyl)-phenyl] 2,2-bis(3,5-di-tert-butyl-4-hydroxybenzyl)malonate.
   Aromatic hydroxybenzyl compounds, for example, 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   Triazine compounds, for example, 2,4-bisoctylmercapto-6-(3,5-di-tert-butyl-4-hydroxyanilino)-1,3,5-triazine, 2-octylmercapto-4,6-bis-(3,5-di-tert-butyl-4-hydroxyanilino)-1,3,5-triazine, 2-octylmercapto-4,6-bis-(3,5-di-tert-butyl-4-hydroxyphenoxy)-1,3,5-triazin e, 2,4,6-tris(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl) isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)hexahydro-1,3,5-triazine, 1,3,5-tris-(3,5-dicyclohexyl-4-hydroxybenzyl) isocyanurate.
   Phosphates and phosphonites, for example, dimethyl 2,5-di-tert-butyl-4-hydroxybenzylphosphonate, diethyl 3,5-di-tert-butyl-4-hydroxy-benzylphosphonate, dioctadecyl 3,5-di-tert-butyl-4-hydroxybenzylphosphonate, dioctadecyl 5-tert-butyl-4-hydroxy-3-methylbenzylphosphonate, Ca salt of monoethyl 3,5-di-tert-butyl-4-hydroxybenzylphosphonate, tetrakis(2,4-di-tert-butylphenyl)-4,4'-biphenylenediphosphonite, 6-isooctyloxy-2,4,8,10-tetra-tert-butyl-12H-dibenz[d,g]-1,3,2-dioxaphosphocine, 6-fluoro-2,4,8,10-tetra-tert-butyl-12-methyl-dibenz[d,g]-1,3,2-dioxaphosphocine.
   Acylaminophenols, for example, 4-hydroxylauranilide, 4-hydroxystearanilide, octyl N-(3,5-di-tert-butyl-4-hydroxyphenyl)carbamate.
   Esters of beta-(3,5-di-tert-butyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propane diol, neopentyl glycol, thiodiethylene glycol, diethylene glycol, triethylene glycol, pentaerythritol, dipentaerythritol, tris(hydroxyethyl) isocyanurate, N,N'-bis(hydroxyethyl)oxalamide, 3-thiaundecanol, 3-thiapentadecanol, trimethylhexanediol, trimethylolpropane, ditrimethylolpropane, 4-hydroxymethyl-1-phospha-2,6,7-trioxabicyclo[2.2.2]octane.
   Esters of beta-(5-tert-butyl-4-hydroxy-3-methylphenyl)propionic acid with mono- or polyhydric alcohols, for example, with methanol, ethanol, octanol, octadecanol, 1,6-hexanediol, 1,9-nonanediol, ethylene glycol, 1,2-propanediol neopentyl glycol, thiodiethylene glycol, diethylene glycol, triethylene glycol, pentaerythritol, tris(hydroxy)ethyl isocyanurate, N,N'-bis(hydroxyethyl)oxalamide, 3-thiaundecanol, 3-thiapentadecanol, trimethylhexanediol, trimethylolpropane, 4-hydroxymethyl-1-phospha-2,6,7-trioxabicyclo[2.2.2]octane.
   Esters of beta-(3,5-dicyclohexyl-4-hydroxyphenyl)propionic acid with mono- or polyhydric alcohols, for example, with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pantaerythritol, tris(hydroxy)ethyl isocyanurate, N,N'-bis(hydroxyethyl)oxalamide, 3-thiaundecanol, 3-thiapentadecanol, trimethylhexanediol, trimethylolpropane, 4-hydroxymethyl-1-phospha-2,6,7-trioxabicyclo[2.2.2]octane.
   Esters of 3,5-di-tert-butyl-4-hydroxyphenylacetic acid with mono- or polyhydric alcohols, for example, with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxy)ethyl isocyanurate, N,N'-bis(hydroxyethyl)oxalamide, 3-thiaundecanol, 3-thiapentadecanol, trimethylhexanediol, trimethylpropane, 4-hydroxymethyl-1-phospha-2,6,7-trioxabicyclo[2.2.2]octane.
   Amides of beta-(3,5-di-tert-butyl-4-hydroxyphenyl)propionic acid, such as, for example, N,N'-bis(3,5-di-tert-butyl-4-hydroxyphenylpropionyl)hexamethylenediamine, N,N'-bis(3,5-di-tert-butyl-4-hydroxyphenylpropionyl)trimethylenediamine, N,N'-bis(3,5-di-tert-butyl-4-hydroxyphenylpropionyl)hydrazine.
   Vitamin E (tocopherol) and derivatives.
   Preference is given to antioxidants of groups 1-5, 10 and 12, especially 2,2-bis(4-hydroxyphenyl)propane, esters of 3,5-di-tert-butyl-4-hydroxyphenylpropionic acid with octanol, octadecanol or pentaerythritol or tris(2,4-di-tert-butylphenyl) phosphite. It is also possible, if desired, to employ a mixture of antioxidants of different structures.
   The antioxidants can be employed in an amount of, for example, from 0.01 to 10 parts by weight judiciously from 0.1 to 10 parts by weight and in particular, from 0.1 to 5 parts by weight per 100 parts by weight of PVC.
VIII. UV absorbers and light stabilizers
   Examples of these are:
   2-(2'-Hydroxyphenyl)benzotriazoles, such as, for example 2-(2'-hydroxy-5'-methylphenyl)benzotriazole, 2-(3',5'-di-tert-butyl-2'-hydroxyphenyl)benzo-triazole, 2-(5'-tert-butyl-2-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octoxyphenyl)benzotriazole, 2-(3',5'-di-tert-amyl-2'-hydroxyphenyl)benzotriazole, 2-(3',5'-bis(alpha,alpha-dimethylbenzyl)-2'-hydroxyphenyl)benzotriazole, mixtures of 2-(3'-tert-butyl-2'-hydroxy-5'-(2-octyloxycarbonylethyl)phenyl)-5-chlorobe nzotriazole, 2-(3'-tert-butyl-5'-[2-(2-ethylhexyloxy)carbonylethyl]-2'-hydroxyphenyl)-5-chlorobenzotri-azole, 2-(3'-tert-butyl-2'-hydroxy-5'-(2-methoxycarbonylethyl)phenyl)-5-chloroben zotriazole, 2-(3'-tert-butyl-2'-hydroxy-5'-(2-methoxycarbonylethyl)phenyl)benzotriazol e, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole and 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazol-2-ylphenol]; the transesterification product of 2-[3'-tert-butyl-5'-(2-methoxycarbonylethyl)-2'-hydroxyphenyl]benzotriazole with polyethylene glycol 300; where R=3'-tert-butyl-4'-hydroxy-5'-2H-benzotriazol-2-yl-phenyl.
   2-Hydroxybenzophenones, for example the 4-hydroxy, 4-methoxy, 4-octoxy, 4-decyloxy, 4-dodecyloxy, 4-benzyloxy, 4,2',4'-trihydroxy, 2'-4,4'-dimethoxy derivative.
      Esters of substituted or unsubstituted benzoic acids, for example 4-tert-butylphenyl salicylate, phenyl salicylate, octylphenyl salicylate, dibenzoylresorcinol, bis(4-tert-butylbenzoyl)resorcinol, benzoylresorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxy-benzoate.
      Acrylates, for example ethyl alpha-cyano-beta, beta-diphenylacrylate or isooctyl-ethyl alpha-cyano-beta,beta-diphenylacrylate, methyl alpha-carbomethoxycinnamate, methyl alpha-cyano-beta-methyl-p-methoxycinnamate or butyl alpha-cyano-beta-methyl-p-methoxycinnamate, methyl alpha-carbomethoxy-p-methoxycinnamate, N-(beta-carbomethoxy-b-cyanovinyl)-2-methyl-indoline.
      Nickel compounds, for example nickel complexes of 2,2'-thiobis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of monoalkyl esters such as the methyl or ethyl ester, of 4-hydroxy-3,5-di-tert-butylbenzylphosphonic acid, nickel complexes of ketoximes, such as of 2-hydroxy-4-methylphenyl undecyl ketoxime, nickel complexes of 1-phenyl-4-lauroyl-5-hydroxypyrazole, with or without additional ligands.
      Oxalamides, for example 4,4'-dioctyloxyoxanilide, 2,2'-dioctyloxy-5,5'-di-tert-butyl-oxanilide, 2,2'-didodecyloxy-5,5'-di-tert-butyloxanilide, 2-ethoxy-2'-ethyloxanilide, N,N'-bis(3-dimethylaminopropyl)oxalamide, 2-ethoxy-5-tert-butyl-2'-ethyloxanilide and its mixture with 2-ethoxy-2'-ethyl-5,4'-di-tert-butyl-oxanilide, mixtures of o- and p-methoxy and of o- and p-ethoxy-di-substituted oxanilides.
   2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine , 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2-hydroxy-3-butyloxypropyloxy)phenyl]-4,6-bis(2,4-dimethyl phenyl)-1,3,5-triazine, 2-[2-hydroxy-4-(2-hydroxy-3-octyloxyprop-yloxy)phenyl]-4,6-bis(2,4-dimethy Iphenyl)-1,3,5-triazine.
      Sterically hindered amines, for example bis(2,2,6,6-tetramethyl-piperidin-4-yl) sebacate, bis(2,2,6,6-tetramethylpiperidin-4-yl) succinate, bis(1,2,2,6,6-pentamethylpiperidin-4-yl) sebacate, bis(1-octyloxy-2,2,6,6-tetramethylpiperidin-4-yl) sebacate, bis(1,2,2,6,6-pentamethylpiperidyl) n-butyl-3,5-di-tert-butyl-4-hydroxybenzylmalonate, the condensate of 1-hydroxyethyl-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-s-triazine, tris(2,2,6,6-tetramethyl-4-piperidyl) nitrilotriacetate, tetrakis(2,2,6,6-tetramethyl-4-piperidyl) 1,2,3,4-butanetetraoate, 1,1'-(1,2-ethanediyl)-bis(3,3,5,5-tetramethylpiperazinone), 4-benzoyl-2,2,6,6-tetramethylpiperidine, 4-stearyloxy-2, 2,6,6-tetramethylpiperidine, bis(1,2,2,6,6-pentamethylpiperidyl) 2-n-butyl-2(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl) sebacate, bis(1-octyloxy-2,2,6,6-tetramethylpiperidyl) succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-di-(4-n-butylamino-2,2,6,6-tetramethylpiperidyl)-1,3,5-triazine and 1,2-bis(3-aminopropylamino)ethane, the condensate of 2-chloro-4,6-di(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4. 5]decane-2,4-dione, 3-dodecyl-1-(2,2,6,6-tetramethyl-4-piperidyl)pyrrolidone-2,5-dione, 3-dodecyl-1-(1,2,2,6,6-pentamethyl-4-piperidyl)pyrrolidine-2,5-dione, mixtures of 4-hexadecyloxy- and 4-stearyloxy-2,2,6,6-tetramethylpiperidine, the condensate of N,N'-bis(2,2,6,6-tetramethyl-4-piperidyl)hexamethylendiamine and 4-cyclohexylamino-2,6-dichloro-1,3,5-triazine, the condensate of 1,2-bis(3-aminopropylamino)ethane and 2,4,6-trichloro-1,3,5-triazine, and also 4-butylamino-2,2,6,6-tetramethylpiperidine (CAS Reg. No. [136504-96-6]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxospiro[4.5]decane, the reaction product of 7,7,9,9-tetramethyl-2-cycloundecyl-1-oxa-3,8-diaza-4-oxospiro[4.5]decane and epichlorohydrin, 1,1-bis(1,2,2,6,6-pentamethyl-4-piperidyloxycarbonyl)-2-(4-methoxyphenyl)e thene, N,N'-bisformyl-N,N'-bis(2,2,6,6-tetramethyl-4-piperidyl)hexamethylenediamine, the diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]-siloxane, the reaction product of maleic anhydride-.alpha.-olefin copolymer and 2,2,6,6-tetramethyl-4-aminopiperidine or 1,2,2,6,6-pentamethyl-4-aminopiperidine.
IX. Blowing agents
   Examples of blowing agents are organic azo and hydrazo compounds, tetrazoles, oxazines, isatoic anhydride, and also sodium carbonate and sodium bicarbonate. Preference is given to azodicarboxamide and sodium bicarbonate and mixtures thereof.
X. Other additives
   Definitions and examples of impact modifiers, thermal modifiers, processing aids, gelling agents, antistatic agents, biocides, fungicides, metal passivators, optical brighteners, flame retardants, antifogging agents and compatibilizers are described in "Kunststoffadditive", R. Gachter/H. Muller, Carl Hanser Verlag, 3rd ed., 1989, and in the "Handbook of Polyvinyl Chloride Formulating" E. J. Wickson, J. Wiley & Sons, 1993, and in "Plastics Additives" G. Pritchard, Chapman & Hall, London, 1st ed., 1998. impact modifiers are also described in detail in "Impact Modifiers for PVC", J. T. Lutz/D. L. Dunkelberger, John Wiley & Sons, 1992.
   The compositions of the present invention can also contain other stabilizers such as aminouracils and particularly 6-aminouracils disclosed for instance in US 6,174,941 Bland/or thiouracils and particularly 4-amino 6-hydroxy 2-mercaptopyrimidine.
   Hydrazides and hydrazide systems may also be added to this composition.

The preferred hydrazides are selected among
□ one or more hydrazides compounds having the following Formula A: 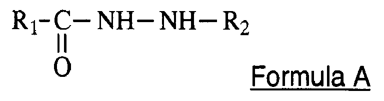
where :
R₁ is
   • a C₁-C₃₀ alkyl group (linear or ramified), a C₂-C₃₀ alkyl group mono or polyinsaturated, C₁-C₃₀ alkyl group containing heteroatoms, C₁-C₃₀ alkyl group substituted by one or more phenyl groups (substituted or not), or by an epoxy function, or by a cycloaliphatic or heterocyclic group, or by halogen atom(s) or by a hydroxy or an alcoxy group.
   • a phenyl, benzyl, naphtyl, toluyl group, optionally substituted by-OH, -Cl, -alcoxy, -alkyl, - cycloalkyl, -COOR or OCOR (where R is a C₁-C₁₂ alkyl group) 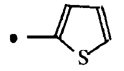 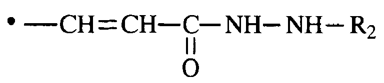 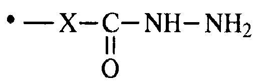 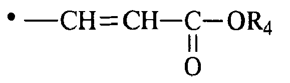
   • C₆H₅ - (CH₂)ₙ - with n varying from 1 to 5
   • -NH-NH₂
R2 = 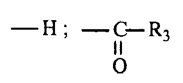
R₃, R₄ is
   * a C₁-C₃₀ alkyl group (linear or ramified), a C₂-C₃₀ alkyl group mono or polyinsaturated, C₁-C₃₀ alkyl group containing heteroatoms, C₁-C₃₀ alkyl group substituted by one or more phenyl groups (substituted or not), or by an epoxy function, or by a cycloaliphatic or heterocyclic group, or by halogen atom(s) or by a hydroxy or an alcoxy group.
   * a phenyl, naphtyl, phenyl group substituted by -OH, -Cl, alcoxy, alkyl, cycloalkyl, -COOR or OCOR (where R is a C₁-C₁₂ alkyl group)
X is
   *a C₁-C₃₀ alkyl group (linear or ramified), a C₂-C₃₀ alkyl group mono or polyinsaturated, C₁-C₃₀ alkyl group containing heteroatoms, C₁-C₃₀ alkyl group substituted by one or more phenyl groups (substituted or not), or by an epoxy function, or by a cycloaliphatic or heterocyclic group, or by halogen atom(s) or by a hydroxy or an alcoxy group.
   *a phenyl (in ortho, meta, para position), naphtyl, phenyl group substituted by -OH, -Cl, alcoxy, alkyl, cycloalkyl, -COOR ou OCOR (where R is a C₁₋C₁₂alkyl group)
R₁ and R₂ can be linked by a covalent bond when R₁ = -CH=CH- and R₂ = -CO-(ketonic function)

The preferred hydrazides compositions are those for which at least one hydrazide is such as
R₁ is
   *a C₁-C₁₇ alkyl group, e.g. methyl, butyl, octyl, ethyl-2-hexyl, stearyl, lauryl,
   *X CO NHNH₂ where X is C₁-C₁₇ alkyl group e.g. methyl, butyl, octyl, ethyl-2 hexyl, stearyl, lauryl, or a 1,3- phenyl group substituted or not
   * a phenol substituted in ortho position, a benzenic cycle, an isophthalic group, a naphtol, a cyclo- S pentadiene-2,4, C₆H₅ -(CH₂)n where n=1
R₂ is
   *H or COR₃ with R₃ is preferably chosen between C₁-C₁₇ alkyl group, e.g. methyl, butyl, octyl, ethyle-2-hexyle, stearyl, lauryl, benzenic ring.

They can also comprise at least one of the following compound as co-stabilizer:
○ one polyol and/or disaccharide alcohol,
○ one perchlorate compound
○ one glycidyl compound
○ one layered lattice coumpound (hydrotalcite),
○ one zeolite compound,
○ one phosphite compound,
○ one beta-diketone and/or beta ketoester,
○ one mercaptocarboxylic ester,
○ one metal soap,
○ one amino- and/or one thiouracil.

The invention also relates to a method of stabilizing chlorine-containing polymers and resins, which comprises adding thereto at least one of the abovementioned stabilizing combinations of the present invention.

Examples of the chlorine-containing polymers and resins to be stabilized are polymers of vinyl chloride and of vinylidene chloride, vinyl resins comprising vinyl chloride units in their structure, such as copolymers of vinyl chloride, and vinyl esters of aliphatic acids, especially vinyl acetate, copolymers of vinyl chloride with esters of acrylic and methacrylic acid and with acrylonitrile, copolymers of vinyl chloride with diene compounds and unsaturated dicarboxylic acids or their anhydrides, such as copolymers of vinyl chloride with diethyl maleate, diethyl fumarate or maleic anhydride, post-chlorinated polymers and copolymers of vinyl chloride, copolymers of vinyl chloride and vinylidene chloride with unsaturated aldehydes, ketones and others, such as acrolein, crotonaldehyde, vinyl methyl ketone, vinyl methyl ether, vinyl isobutyl ether and the like; polymers of vinylidene chloride and its copolymers with vinyl chloride and other polymerizable compounds; polymers of vinyl chloroacetate and dichlorodivinyl ether; chlorinated polymers of vinyl carboxylate, such as vinyl acetate, vinyl propionate, vinyl butyrate, chlorinated polymeric esters of acrylic acid and of alpha-substituted acrylic acid, such as methacrylic acid, of nitriles, amides, alkyl esters such as acrylonitrile, (meth)acrylamide, methyl (meth)acrylate, butyl acrylate, ethyl acrylate, 2-ethyl hexyl acrylate; polymers of vinyl aromatic derivatives, such as styrene, dichlorostyrene; chlorinated rubbers; chlorinated polymers of olefin, such as ethylene, propene, 1-butene, (2.2.1)bicyclo heptene-2, (2.2.1) bicyclo hepta-diene-2,5; polymers and post-chlorinated polymers of chlorobutadiene and copolymers thereof with vinyl chloride, chlorinated natural and synthetic rubbers, and also mixtures of these polymers with one another or with other polymerizable compounds. In the context of this invention, PVC also embraces copolymers with polymerizable compounds such as acrylonitrile, vinyl acetate or ABS, which can be suspension, bulk or emulsion polymers. Preference is given to PVC homopolymers and copolymers, optionally post-chlorinated, alone or in combination with polyacrylates. Also included are graft polymers of PVC with EVA, ABS and MBS. Preferred substrates are also mixtures of the abovementioned homo- and copolymers, especially vinyl chloride homopolymers, with other thermoplastic and/or elastomeric polymers, especially blends with ABS, MBS, NBR, SAN, EVA, CPE, MBAS, PMA, PMMA, EPDM and polyactones.

These polymers and resins can be thermoplastic and/or elastomeric.

Examples of such components are compositions of (i) 20-80 parts by weight of a vinyl chloride homopolymer (PVC) and (ii) 80-20 parts by weight of at least one thermoplastic copolymer based on styrene and acrylonitrile, in particular from the group ABS, NBR, NAR, SAN and EVA. The abbreviations used for the copolymers are familiar to the person skilled in the art and have the following meanings: ABS: acrylonitrile-butadiene-styrene; SAN: styrene-acrylonitrile; NBR: acrylonitrile-butadiene; NAR: acrylonitrile-acrylate; EVA: ethylene-vinyl acetate. Also suitable in particular are acrylate-based styrene-acrylonitrile copolymers (ASA). Preferred components in this context are polymer compositions comprising as components (i) and (ii) a mixture of 25-75% by weight PVC and 75-25% by weight of the abovementioned copolymers. Examples of such compositions are: 24-50% by weight PVC and 75-50% by weight copolymers of 40-75% by weight PVC and 60-25% by weight copolymers. Preferred copolymers are ABS, SAN and modified EVA, especially ABS, NBR, NAR and EVA are also particularly suitable. In the composition of the invention it is possible for one or more of the abovementioned copolymers to be present. Particularly important components are compositions comprising (i) 100 parts by weight of PVC and (ii) 0-300 parts by weight of ABS and/or SAN-modified ABS and 0-80 parts by weight of the copolymers NBR, NAR and/or EVA, but especially EVA.

For stabilization in the context of this invention, further suitable polymers are, in particular, recyclates of chlorine-containing polymers, these polymers being the polymers described in more detail above that have also undergone damage through processing, use or storage. PVC recyclate is particularly preferred. The recyclates may also include small amounts of extraneous substances, such as, for example, paper, pigments, adhesives, which are often difficult to remove. These extraneous substances may also arise from contact with various materials in the course of use or reprocessing, examples being residues of fuel, fractions of coating material, traces of metal and residues of initiator.

Stabilization in accordance with the invention is of particular advantage in the context of PVC formulations which are customary for pipes and profiles. Stabilization can be effected without heavy metal compounds (Sn, Pb, Cd, Zn stabilizers). This characteristic offers advantages in certain fields, since heavy metals -with the exception of zinc at best- are often unwanted both during the production and during the use of certain PVC articles, on ecological grounds. The production of heavy metal stabilizers also often causes problems from an industrial hygiene standpoint. Similarly, the processing of ores containing heavy metals is frequently associated with serious effects on the environment, the environment here including the biosystem of humankind, animals (fish), plants, the air and soil. For these reasons, the incineration and landfilling of plastics containing heavy metals is also disputed.

In order to achieve stabilization in the chlorine-containing polymers or resins, the compound(s) of the Formula I are preferably to be used in a proportion of judiciously from about 0.01 to about 10% by weight, preferably from about 0.05 to about 5% by weight and, in particular, from about 0.1 to about 3% by weight of the total stabilized polymer or resin.

The stabilizing composition of the invention can judiciously be incorporated by the following methods: as an emulsion or dispersion (one possibility, for example, is the form of a pastelike mixture. An advantage of the combination of the invention in the case of this form is the stability of the paste); as a dry mix in the course of the mixing of additional stabilizers and/or polymer mixtures; by direct addition to the processing apparatus (e.g. calenders, mixers, compounders, extruders and the like), or as a solution or melt or as flakes or pellets in dust-free form as a one-pack product.

The PVC stabilized in accordance with the invention can be prepared in a manner known per se using devices known per se such as the abovementioned processing apparatus to mix the stabilizing composition of the invention and any further additives with the PVC. In this case, the stabilizers can be added individually or as a mixture or else in the form of so-called masterbatches.

The PVC stabilized in accordance with the present invention can be brought into the desired form by known methods. Examples of such methods are milling, calendering, extruding, injection molding or spinning, and also extrusion blow molding. The stabilized PVC can also be processed to foam materials.

A PVC stabilized in accordance with the invention is suitable, for example, for hollow articles (bottles), packaging films (thermoform sheets), blown films, pipes, foam materials, heavy profiles (window frames), transparent-wall profiles, construction profiles, sidings, fittings, office films and apparatus enclosures (computers, domestic appliances).

Preference is given to PVC rigid foam articles and PVC pipes for drinking water or wastewater, pressure pipes, gas pipes, cable-duct and cable protection pipes, pipes for industrial pipelines, seepage pipes, flowoff pipes, guttering pipes and drainage pipes. For further details on this subject see "Kunststoffhandbuch PVC", Vol. 2/2, W. Becker/H. Braun, 2nd ed., 1985, Carl Hanser Verlag, Pages 1236-1277.

### Examples

In the folllowing examples the term « phr » means per hundred of PVC resin (ex : 0,2 phr : 0,2 g per 100 g of PVC).

For examples 1 to 8 the formulation without the stabilizer consists in:

**Table I**

| | |
|---|---|
| PVC (Lacovyl S110P, Atofina, kW = 68) | 100 |
| Paraffin wax (Licolub XL 165, Clariant) | 0.5 |
| PE wax (Licolub PE 520, Clariant) | 0.7 |
| Oxidized PE wax (AC-316 Honeywell) | 0.05 |
| Calcium Carbonate (Omyalite 90T, Omya) | 10 |
| TiO₂ (CL 2220, Kronos) | 1 |
| Calcium Stearate (Stavinor CAPSE, Atofina) | 0.7 |

### Example 1

The PVC formulations (amounts of each component of stabilization system in phr are given below) are evaluated using a Collin two-rollmill, the rolls of which are brought to 190 °C. The rotational speeds of the 2 cylinders are respectively adjusted to 20 round/min and 24 rpm, so as to gel and squeeze the material between the cylinders while contributing frictional work. The separation between the cylinders is adjusted to 0.5 mm. Samples are withdrawn from the cylinders at regular time intervals, their coloration being recorded.

The stabilizer of formula I of the present invention is chosen among :
Stab 1 = Mercaptobenzimidazole (CAS n°583-39-1) at 0.3 phr
Stab 2 = Mercaptobenzoxazole (CAS n°2382-96-9) at 0.3 phr
Stab 3 = 2-Mercaptobenzothiazole (CAS n°149-30-4) at 0.3 phr
The costabilizer chosen here is an Alcamizer IV-2 from Kyowa at 0.5 phr

The Yellowing Index (YI, ASTM Standard E 313) is measured on each sample withdrawn and the results are reported in Table II below:

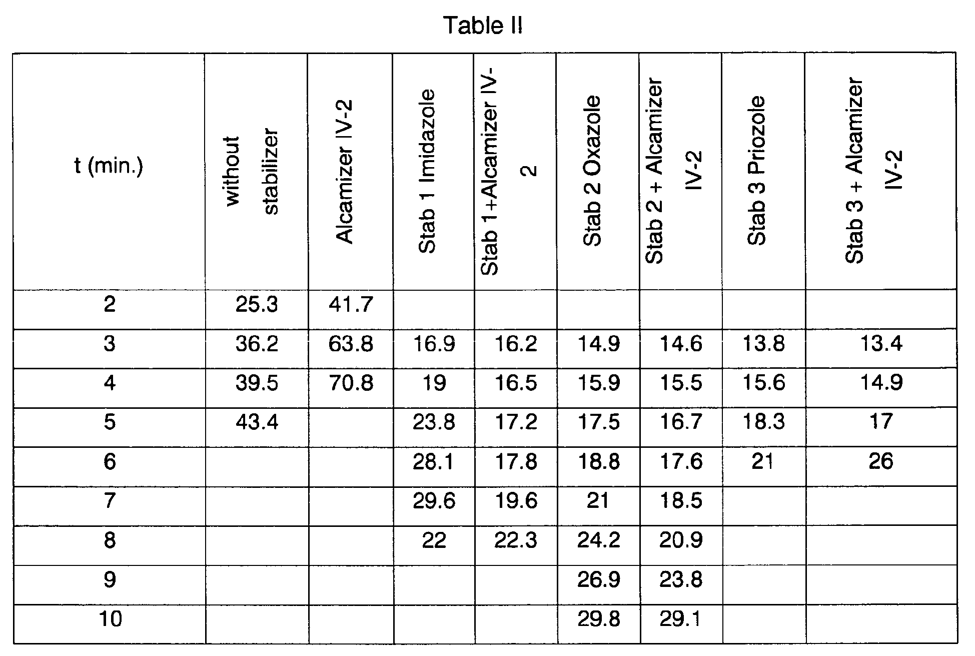

The results listed in Table II show the efficiency of the stabilization effect of the compositions of the present invention not only on the initial color of the PVC formulation but also on the long term colorhold retention compared to unstabilized formulation.

### Example 2

As in example 1, we made a combination of a mercaptobenzimidazole (0.3 phr) or mercapto benzoxazole (0.3 phr) or 2 mercaptobenzothiazole (0.3 phr) and a costabilizer (0.4 phr). The PVC was processed on the same manner as in example 1.

The costabilizer chosen here is a perchlorate component (MP100 from Akishima).

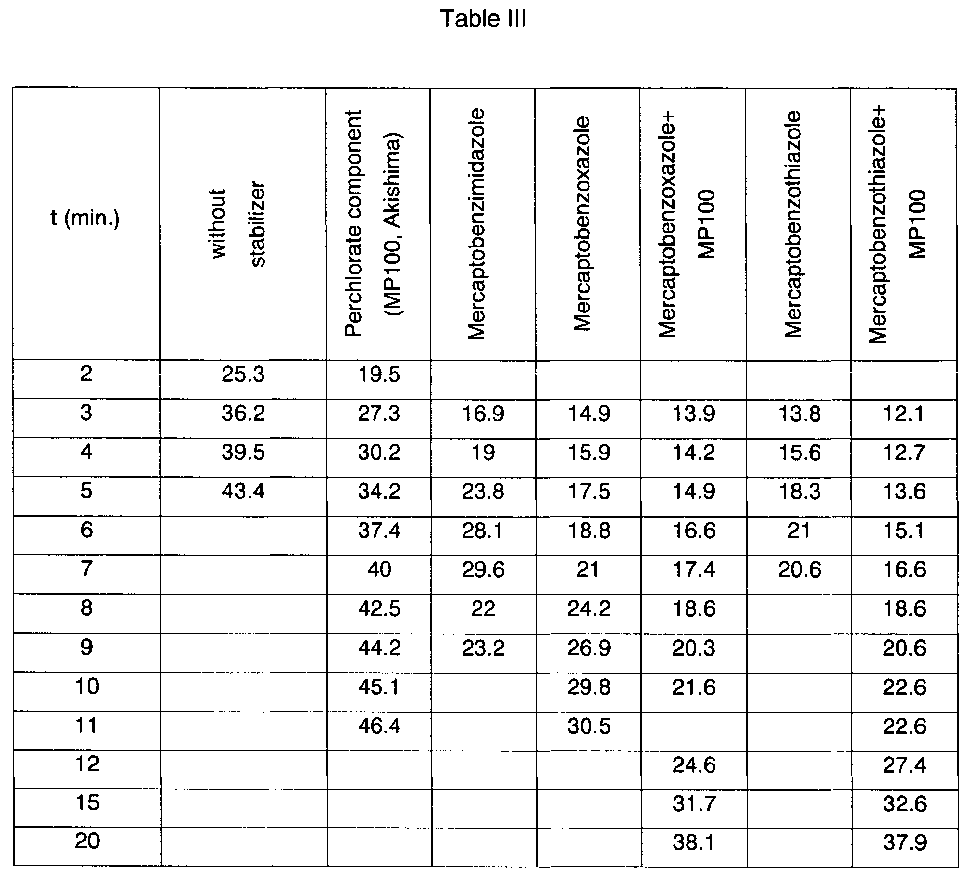

The great advantage of this type of combination is to increase a lot the long term color retention. Process time was almost doubled thanks to the combination of the two components.

### Example 3

PVC formulation was the same as in example 1 and the stabilizer is a combination of a 2 mercaptobenzothiazole (0.3 phr) and a zinc stearate (Stavinor ZnE from Arkema, 0.2 phr) or mercaptobenzimidazole (0.3 phr) and a mixture of beta diketones (Rhodiastab RH 55 from Rhodia: 0.2 phr + Rhodiastab 77 from Rhodia 0.2 phr). The PVC was processed on the same manner as in example 1.

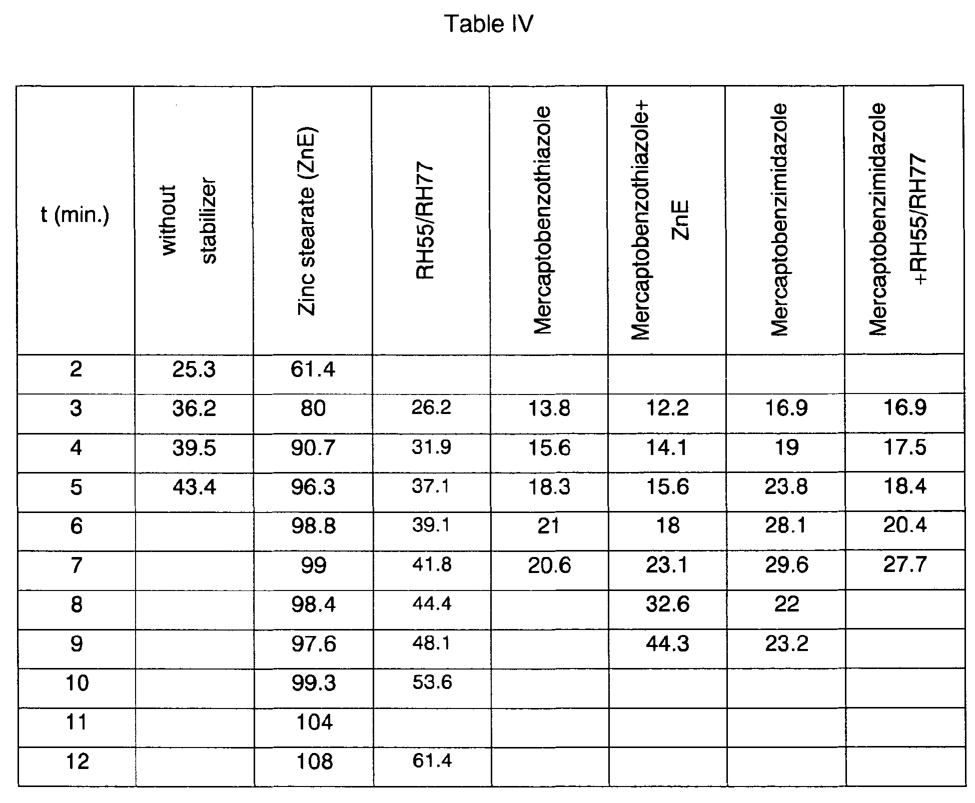

It can be shown that the presence of zinc carboxylate improves the color of the PVC formulation as well as the presence of beta diketones.

### Example 4

As in example 1, we made a combination of a mercaptobenzimidazole (0.3 phr) or mercapto benzoxazole (0.3 phr) or 2 mercaptobenzothiazole (0.3 phr) and a costabilizer (0.5 phr). The PVC was processed on the same manner as in example 1. The costabilizer chosen here is trimethylolpropane (TMP from Perstorp).

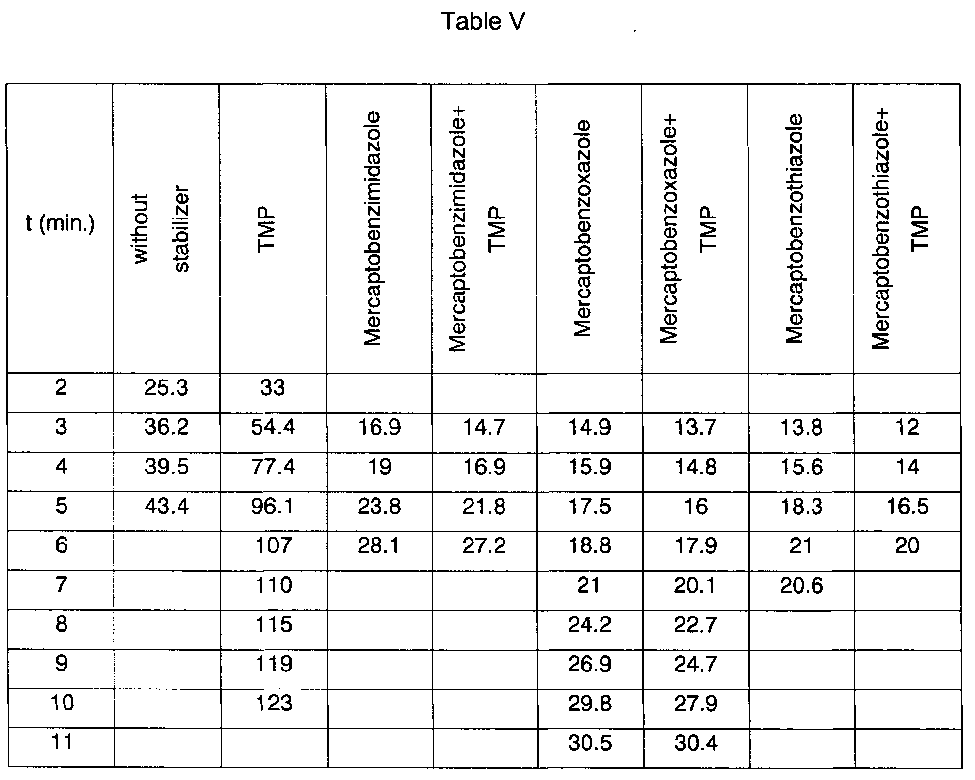

This table shows a good synergy between the two components of the stabilizer formulation allowing to reduce especially the development of color in the initial steps of degradation.

### Exemple 5

As in example 1, we made a combination of a mercaptobenzimidazole (0.3 phr) or mercapto benzoxazole (0.3 phr) or 2 mercaptobenzothiazole (0.3 phr) and isophthalic dihydrazide (CAS n° 2780-98-7; 0.2 phr). The PVC was processed on the same manner as in example 1.

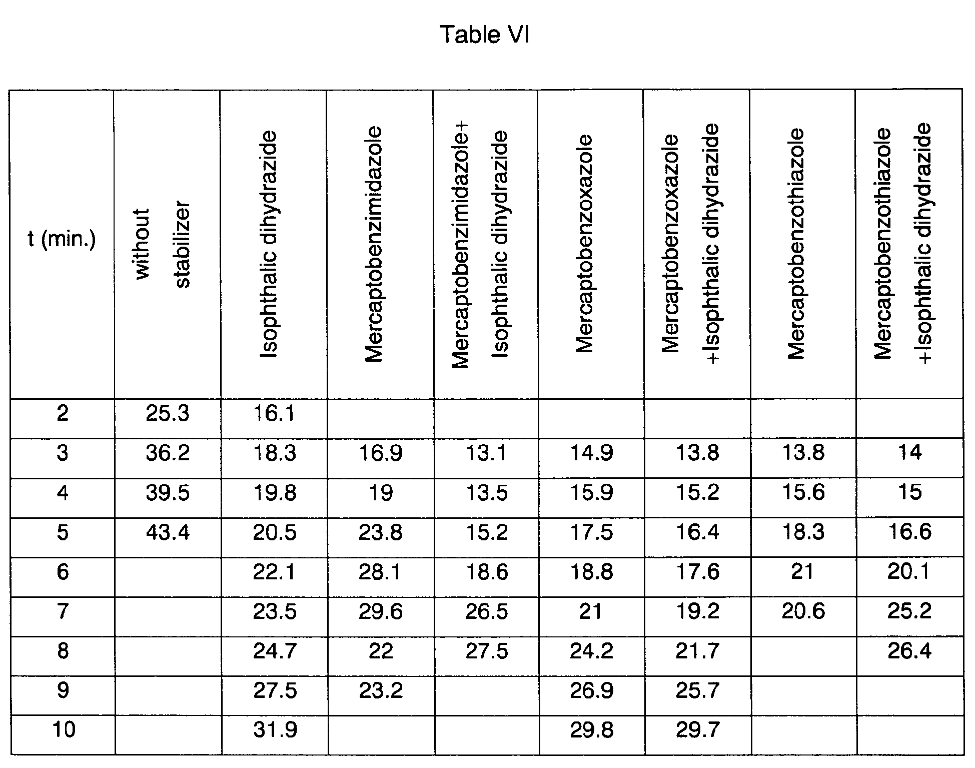

These combinations are particularly efficient in the initial steps of PVC degradation so that PVC keeps a low level of yellow index in the first 5 minutes of processing.

### Example 6

As in example 1, we made a combination of a mercaptobenzimidazole (0.3 phr) or mercapto benzoxazole (0.3 phr) or 2 mercaptobenzothiazole (0.3 phr) and 1,3 diméthyl 6 aminouracile (CAS n° 6642-31-5; 0.2 phr). The PVC was processed on the same manner as in example 1.

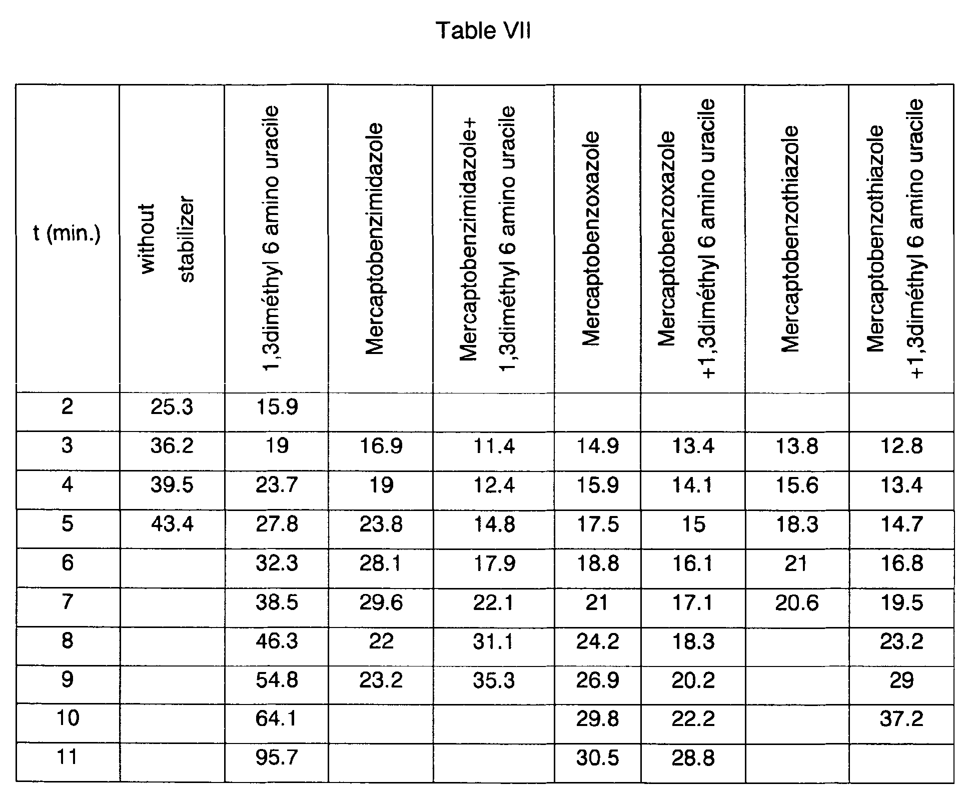

As in example 5, these combinations allow to have excellent performances in initial color.

### Example 7

As in example 1, we made a combination of a mercaptobenzimidazole (0.3 phr) or mercapto benzoxazole (0.3 phr) or 2 mercaptobenzothiazole (0.3 phr) and a diphenylisodecyl phosphite (Stavinor DPDP from Atofina; 0.3 phr). The PVC was processed on the same manner as in example 1.

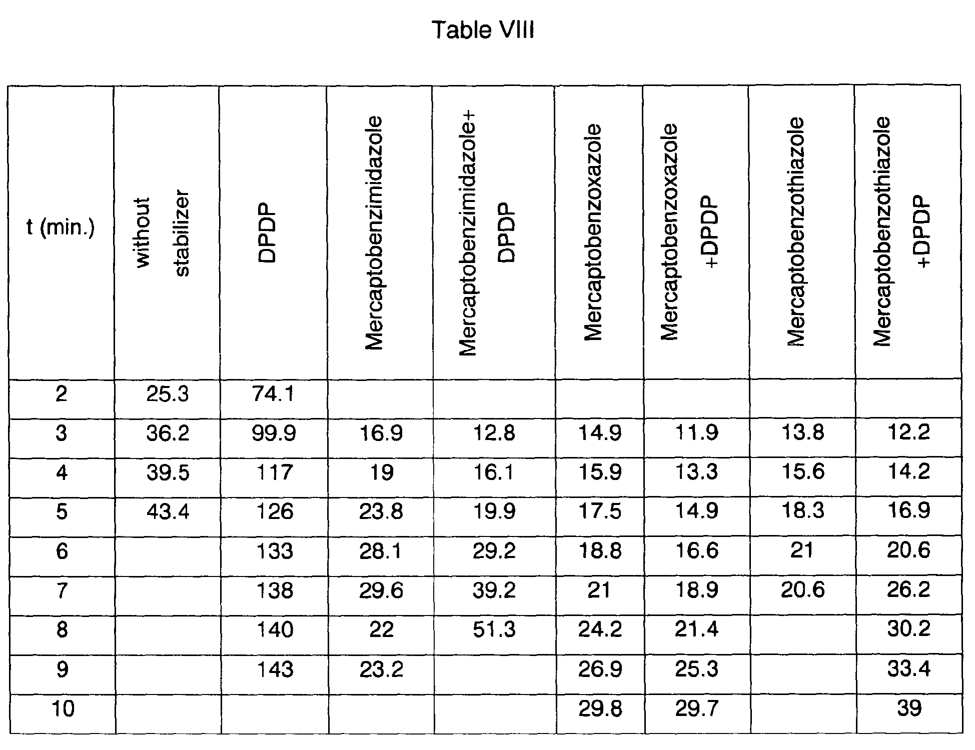

These combinations allow PVC to maintain a very good color retention all along the processing time.

### Example 8

As in example 1, we made a combination of a mercaptobenzimidazole (0.3 phr) or mercapto benzoxazole (0.3 phr) or 2 mercaptobenzothiazole (0.3 phr) and a epoxydized soya bean oil (Ecepox PB3 from Arkema; 0.5 phr). The PVC was processed on the same manner as in example 1.

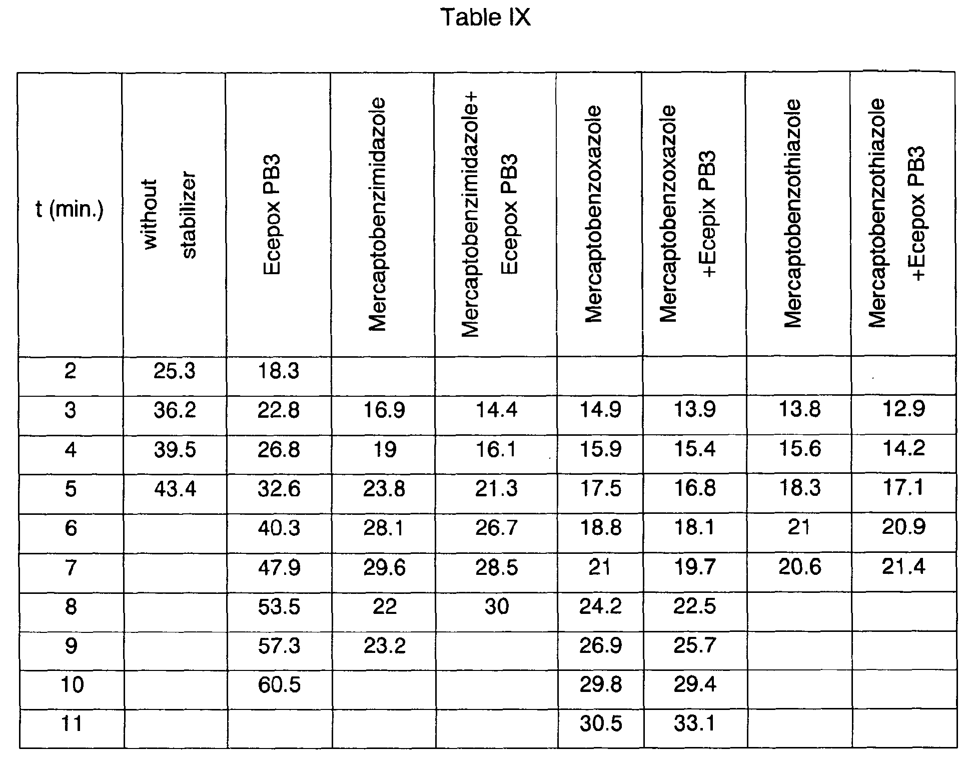

These combinations allow also to maintain a very good level of yellow index especially in the first steps of degradation.

### Example 9

3 PVC formulations for pipe extrusion whose components are listed in the following Table X are processed on a single screw extruder Polylab Rheomex 252P from Haake (φ 19 mm, L/D 25). The temperature profile set up was: 195-200-195 °C with a screw speed of 40 rpm (bulk temperature at the entrance of the die: 188 °C).

**Table X**

| Formulation n° | 1 | 2 | 3 | 4 | 5 |
|---|---|---|---|---|---|
| PVC (Lacovyl S110P, Arkema, kW = 68) | 100 | 100 | 100 | 100 | 100 |
| Paraffin wax (Licolub XL 165 , Clariant) | 0,5 | 0,5 | 0,5 | 0,5 | 0,5 |
| Oxidized PE wax (A-C 629A , Honeywell) | 0,05 | 0,05 | 0,05 | 0,05 | 0,05 |
| PE wax (Licolub PE 520, Clariant) | 0,7 | 0,7 | 0,7 | 0,7 | 0,7 |
| calcium stearate (Stavinor CAPSE, Arkema) | 0,7 | 0,7 | 0,7 | 0,7 | 0,7 |
| Na zeolite P (Wessalith P, Degussa) | 0,3 | 0,3 | 0,3 | 0,3 | 0,3 |
| chalk (Omyalite 90 T, Omya) | 10 | 10 | 10 | 10 | 10 |
| TiO₂ (Kronos 2220) | 1 | 1 | 1 | 1 | 1 |
| Organic based system from the market based on dimethyl1,3 aminouracil-6 | 0.2 | | | | |
| Mercaptobenzimidazole | | 0.2 | | | |
| Mercaptobenzoxazole | | | 0.2 | | |
| Mercaptobenzothiazole | | | | 0.2 | |
| isopthalic hydrazide | | | | | 0.2 |
| | | | | | |
| Yellow Index (min) | 15.86 | 13.7 | 13.5 | 14.3 | 16.5 |

The stabilizer of the present invention allows to achieve a surface aspect and color of the extrudate very satisfying compared to already existing organic based systems.

## Claims

1. A stabilizing composition for chlorine-containing polymers and resins substantially free and preferably free from metal stabilizers based on
□ one or more organic compound having the following Formula I: 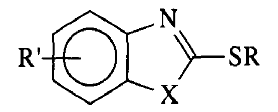 where :
R and R, equal or different, are
• an hydrogen, a C₁-C₃₀ alkyl group (linear or ramified), a C₂-C₃₀ alkyl group mono or polyinsaturated, C₁-C₃₀ alkyl group containing heteroatoms, C₁-C₃₀ alkyl group substituted by one or more phenyl groups (substituted or not), or by an epoxy function, or by a cycloaliphatic or heterocyclic group, or by halogen atom(s) or by a hydroxy or an alcoxy group.
• a phenyl, benzyl, naphtyl, toluyl group, optionally substituted by -OH, -Cl, -alcoxy, -alkyl, - cycloalkyl, -COOR or OCOR (where R is a C₁-C₁₂ alkyl group)
X is O (oxazoles family), S (thiazoles family) or NH (imidazoles family).

2. A stabilizing composition according to claim 1 comprising
□ at least one of the following compound as co-stabilizer:
• one polyol and/or disaccharide alcohol,
• one perchlorate compound
• one glycidyl compound
• one layered lattice coumpound (hydrotalcite),
• one zeolite compound,
• one phosphite compound,
• one beta-diketone and/or beta ketoester,
• one mercaptocarboxylic ester,
• one metal soap,
• one amino- and/or one thiouracil,
• one hydrazide.

3. A stabilizing composition according to claim 1 or 2, whrein at least one compound of Formula I is such as:
R is H or CH₃ and R' is H.

4. A stabilizing composition according to any one of claim 1 to 3, wherein at least one co-stabilizer is chosen from hydrotalcite and/or trimethylolpropanol and/or zeolite P and/or perchlorate compound and/or phosphite and/or epoxidized soya bean oil and/or beta-dicarbonyl compounds.

5. A stabilizing composition according to any one of claims 1 to 4 comprising at least one zinc carboxylate and/or alkali metal carboxylate (especially calcium stearate) and/or alkaline earth metal carboxylate and/or aluminum carboxylate.

6. A stabilizing composition according to any one of claims 1 to 5 where it further contains one or more stabilizers, processing aids, lubricants, plasticizers, pigments, fillers, epoxidized fatty acid esters, antioxidants, UV absorbers and light stabilizers, optical brighteners, impact modifiers and processing aids, gelling agents, antistats, biocides, fungicides, metal passivators, flame retardants and blowing agents, antifog agents, compatibilizers and/or antiplateouts agents.

7. A stabilizing composition according to any one of claims 1 to 6 where the stabilizer system is particularly chosen among CaZn or BaZn systems, tin systems, amino and thiouracils systems, latent mercaptide systems, tris (2-hydroxyethyl) isocyanurate, alphaphenyl indole, pyrrolidines and/or hydrazides.

8. Use of a composition according to any one of claims 1 to 7 where one of the chlorine-containing polymer(s) and resin(s) is PVC.

9. Use of a composition according to any one of claims 1 to 7 whose at least one part of the chlorine- containing polymer(s) and resin(s) are recycled one(s).

10. Use according to claim 8 and/or 9 where the amount of of the component of Formula I is within the range from 0.2 to 5, and particularly from 0.5 to 2 phr

11. Use according to claim 8 to 10 for manufacturing of pipes or fittings.

12. Use according to claim 8 to 10 for manufacturing of compact or foamed sheets, films (rigid or flexible), profiles.
